# EUROPÄISCHE PATENTSCHRIFT

(11) **EP 4 368 952 B1**
(45) Veröffentlichungstag und Bekanntmachung des Hinweises auf die Patenterteilung: **08.07.2026**
(21) Anmeldenummer: 22206976.7
(22) Anmeldetag: 11.11.2022
(51) Int. Cl.: G01F 25/17, G01F 23/00, G01F 1/76, G01F 23/24

(54) **KALIBRIERELEMENT, STEUERUNG FÜR EIN KALIBRIERELEMENT, KALIBRATIONSSYSTEM, FÖRDERSYSTEM UND VERFAHREN ZUM BETRIEB EINES KALIBRIERELEMENTS**
CALIBRATION ELEMENT, CONTROLLER FOR A CALIBRATION ELEMENT, CALIBRATION SYSTEM, CONVEYOR SYSTEM AND METHOD FOR OPERATING A CALIBRATION ELEMENT
ÉLÉMENT D'ÉTALONNAGE, DISPOSITIF DE COMMANDE POUR UN ÉLÉMENT D'ÉTALONNAGE, SYSTÈME D'ÉTALONNAGE, SYSTÈME DE TRANSPORT ET PROCÉDÉ DE FONCTIONNEMENT D'UN ÉLÉMENT D'ÉTALONNAGE

(43) Veröffentlichungstag der Anmeldung: 15.05.2024
(73) Patentinhaber: Eppendorf SE, 22339 Hamburg (DE)
(72) Erfinder: Ertel, Guido, 41539 Dormagen (DE); Selzer, Sebastian, 3400 Klosterneuburg (AT); Streule, Wolfgang, 52445 Titz-Rödingen (DE)
(74) Vertreter: RGTH

(56) Entgegenhaltungen:
- CN-A- 114 414 008
- DE-B1- 1 498 425
- FR-A1- 2 320 533
- FR-A1- 2 794 238
- US-A- 3 888 106
- US-A- 5 170 656
- US-A- 5 199 308
- US-A1- 2007 169 537
- US-A1- 2017 100 025
- US-A1- 2017 284 853

## Beschreibung

Die Erfindung betrifft ein Kalibrierelement, eine Steuerung für ein Kalibrierelement, ein Kalibrationssystem, ein Fördersystem und ein Verfahren zum Betrieb eines Kalibrierelements.

In industriellen Prozessen, wie beispielsweise im Bioprocessing, werden Pumpen eingesetzt, um Medien einer Reaktion (beispielsweise in einem Bioreaktor) zuzuführen. Essenziell ist hierbei unter anderem, genau zu wissen, wie viel Medium durch die Pumpe gefördert wird, beispielsweise bei Fed-Batch- oder Perfusionsprozessen. Die hierzu notwendige Kalibrierung der Pumpen in Bezug auf deren Durchfluss, wird heute meist mittels einer Wägezelle durchgeführt. Ist die Pumpe mit einem Pumpschlauch oder sonstigen auswechselbaren Elementen ausgeführt, so ist diese Kalibration auch von diesen Elementen abhängig - insbesondere von Material, Veränderung der Elastizität und "Quetschverhalten" der Elemente über die Zeit und muss damit immer dann wiederholt werden, wenn dieses Element, beispielsweise der Pumpenschlauch, getauscht wird.

Die in der Bioprozesstechnologie bis dato eingesetzte Lösungen, benötigen immer einen aufwendigen Prozess mit einer Wägezelle oder dem Auslitern des Pumpvorgangs. Vor dem Versuch wird hier eine Menge Zeit und auch Medium benötigt, um die gewichtsbezogene Kalibrierung mittels Wägezelle durchzuführen. Vor allem bei hochparallelen Systemen ist der initiale Zeitaufwand für den Anwender sehr hoch.

Darüber hinaus, limitiert bzw. behindert das aktuell verwendete Kalibrierprozedere per Wägezelle den Einsatz von Einwegschlauch-Kits. Dies ist darin begründet, dass Einwegschlauch-Kits direkt vom Anwender eingesetzt werden, beziehungsweise die Verbindung mit Waagen/Wägeflaschen unpraktikabel ist (Zeit- und Materialaufwand).

Darüber hinaus ist die Gefahr einer Kontamination der Kultur durch zusätzlich notwendige Schlauchverbindungen gegeben, was Anwender bei Bioprozessen möglichst vermeiden möchten.

Aus Dokument DE 14 98 425 B1 ist eine Vorrichtung zur Eichung von Durchflussmengenmessern bekannt, aus Dokument US 5 199 308 A eine Sensorhalterung zur Verwendung in einer Struktur zur Messung eines Flüssigkeitsvolumens bekannt. Auch die Dokumente FR 2 320 533 A1, US 3 888 106 A, FR 2 794 238 A1, US 2017/284853 A1, CN 114 414 008 A, US 5 170 656 A, US 2007/169537A1 und US 2017/100025 A1 beschreiben Durchflussmesseinrichtungen. Insbesondere offenbart US 3 888 106 A, dass, wenn Messkomponenten mit unterschiedlichen Kapazitäten getestet werden sollen, die Vorrichtung auch mit einer Vielzahl von kalibrierten Flüssigkeitssammelbehältern versehen sein kann, die jeweils für einen anderen Typ von Durchflussmessgerät kalibriert sind, und dass das System so ausgelegt ist, dass der für eine bestimmte Testreihe geeignete Behälter selektiv in das Durchflusssystem gekoppelt werden kann.

Bekannte Flusssensoren (insbesondere thermische Masseflusssensoren) können im Normalfall nicht für die Kalibration der Pumpe eingesetzt werden, da hierfür eine genaue Kenntnis von Medienparametern, wie zum Beispiel der thermischen Kapazität, von Nöten ist. Des Weiteren sind am Markt erhältliche Flusssensoren nicht für die geringen Dosierraten für Kleinbioreaktorsysteme geeignet.

Es ist somit Aufgabe der Erfindung eine Kalibriermöglichkeit bereitzustellen, die mit reduziertem Material- und Zeitaufwand sicher durchgeführt werden kann und insbesondere auch bei geringen Dosierraten und mit Einwegschlauch-Kits einsetzbar ist.

Diese Aufgabe wird gemäß einem ersten Aspekt der Erfindung gelöst durch ein Kalibrierelement gemäß Anspruch 1, umfassend mindestens zwei Messkammern mit jeweils einem an einer ersten Messstelle an einem Zufluss zur jeweiligen Messkammer angeordneten ersten Flüssigkeitssensor zur Detektion einer Präsenz einer Flüssigkeit und einem an einer zweiten Messstelle an einem Abfluss der jeweiligen Messkammer angeordneten zweiten Flüssigkeitssensor, wobei die mindestens zwei Messkammern fluidisch parallel geschaltet sind.

Die Erfindung schließt die Erkenntnis ein, dass eine Kalibrierung statt über eine Wägung auch über eine exakte volumetrische Messung erfolgen kann. Die Erfindung macht damit eine Wägezelle überflüssig und erlaubt es durch die Verwendung der Messkammer eine Kalibration beim Primen, also beim initialen Füllen der Schläuche, des Systems vorzunehmen. Durch die Messung der Zeit, welche gebraucht wird, um ein oder mehrere exakt vorgegebene Volumen, also die mindestens eine Messkammer zu füllen, lässt sich der Volumenstrom über die Gleichung Q=V/t bestimmen. Damit ist für jede Pumpeneinstellung ein Volumenstrom direkt im Aufbau bestimmbar und kann für die Kalibrierung genutzt werden. Dies kann sowohl initial als auch fortlaufend jederzeit genutzt werden, um einen aktuellen Volumenstrom zu bestimmen, beispielsweise nach Wechsel von Zubehörelementen oder im Lauf der Zeit, um Abweichungen im Pumpverhalten feststellen zu können.

Zur Bestimmung des Volumenstroms durchfließt das jeweilige Medium eine oder mehrere Messkammern mit exakt bekanntem Volumen, an deren Ein- und Auslässen sich Sensoren befinden, welche die Präsenz der Flüssigkeit feststellen können. Beim Eintritt der Flüssigkeit in eine der Kammern und beim Austritt aus selbiger Kammer kann dann ein Zeitstempel erhoben und gespeichert werden und so der Volumenstrom gemäß Q=V/t bestimmt werden.

Die Erfindung erlaubt also eine einfache Handhabung, da die Kalibration quasi "en passant" beim Primen der Leitung erfolgen kann, was sowohl Zeit als auch Medium einspart. Der beschriebene Aufbau kann weiter dazu benutzt werden, einen integrierten Flusssensor auf einen notwendigen Auflösungsbereich und die Flüssigkeitseigenschaften der Anwendung zu kalibrieren, was insbesondere die Verwendung im Bereich kleiner Dosierraten erlaubt. Ein weiterer Aspekt der Erfindung liegt darin, dass durch eine mögliche Speicherung der erfassten Volumenströme ein Vergleich von aktuellen und historischen Flussparametern möglich ist und damit eine automatisierbare Überprüfung möglich ist. Zusätzlich erlaubt die Erfindung die Detektion von Blasen im System über den Vergleich von Volumenströmen.

Nachfolgend werden Ausführungsbeispiele des erfindungsgemäßen Kalibrierelementes beschrieben.

In einer Ausführungsform sind Ein- und Ausgangsbereiche mindestens einer Messkammer so ausgestaltet, dass Schwankungen, zum Beispiel in der Oberflächenspannung ausgeglichen werden können. Hierzu ist es vorteilhaft, wenn mindestens eine Messkammer einen rautenförmigen Querschnitt aufweist und von einer Spitze der Raute zur gegenüberliegenden Spitze durchflossen wird. Insbesondere sind Ausführungsformen bevorzugt, bei denen die mindestens eine Messkammer die Form eines Rhomboeders oder einer Doppelpyramide aufweist.

In einer Ausführungsform des Kalibrierelementes ist der erste und/oder der zweite Flüssigkeitssensor ausgebildet, eine Präsenz von Flüssigkeit optisch, akustisch oder über eine Widerstands- oder Impedanzmessung zu detektieren. Eine Kontaktierung des ersten und/oder zweiten Flüssigkeitssensors kann vorzugsweise über Kabel oder Kontakte wie beispielsweise Federkontakte erfolgen.

In einer bevorzugten Ausführungsform umfasst ein Kalibrierelement weiter einen fluidisch mit mindestens einer der Messkammern verbundenen Flusssensor, insbesondere einen Massenflusssensor. Durch die Integration eines Flusssensors, kann auch während des Prozesses eine Verifizierung des Durchflusses, inkl. einer möglichen Re-Kalibrierung des Flusssensors erfolgen. Durch eine initiale Kalibrierung des Flusssensors auch bezüglich des verwendeten Mediums (beispielsweise hinsichtlich der thermischen Kapazität) können insbesondere Abweichungen im Pumpverhalten auch fortlaufend im Prozess detektiert werden. Dieser Sensor kann also auch im weiteren Prozessverlauf für ein genaues Tracking des Pumpverhaltens verwendet werden. Sein Flussintegral stellt hierbei das gesamte abgegebene Volumen dar. Dies ist insbesondere dann sinnvoll, wenn Pumpschläuche verwendet werden, deren Verhalten sich während des Prozessverlaufs ändert (beispielsweise durch ein Einlaufverhalten oder eine Alterung des Schlauchmaterials). Eine solche Abweichung kann dann durch einen mittels der initialen Volumenstrombestimmung kalibrierten Flusssensors detektiert und so dann kompensiert werden. Der Flusssensor ist bevorzugt zwischen Pumpe und der mindestens einen Messkammer angeordnet. Alternativ kann er aber auch fluidisch nach der Messkammer angeordnet sein.

Erfindungsgemäß umfasst das Kalibrierelement mindestens zwei Messkammern mit jeweils einem ersten und einem zweiten Flüssigkeitssensor. Die Messkammern sind fluidisch parallel geschaltet.

Durch das Hintereinander- oder Parallelschalten von mehreren Messkammern kann durch eine Mittelwertbildung der Ergebnisse aus den mehreren Messkammern eine zusätzliche Genauigkeit erreicht werden. Außerdem können so grobe Unregelmäßigkeiten im Materialtransport oder Volumenstrom detektiert werden, insbesondere bei Messkammern, die nacheinander befüllt werden. Ebenso kann die Füllzeit der unterschiedlichen Messkammern bei unterschiedlichen Pumpraten bestimmt werden, um so eine Mehrpunktkalibration der Pumpe zu erzielen, in dem für jede Füllung einer weiteren Messkammer eine andere Pumprate verwendet wird. Auch hierfür ist insbesondere eine Reihenschaltung vorteilhaft.

Bevorzugt ist dabei der zweite Flüssigkeitssensor einer ersten Messkammer gleichzeitig der erste Flüssigkeitssensor einer direkt nachfolgend zur ersten Messkammer angeordneten zweiten Messkammer.

Gemäß einem zweiten Aspekt, betrifft die Erfindung eine Steuerung für ein Kalibrierelement mit einer ersten und einer zweiten Messkammer. Die Steuerung ist ausgebildet, ein erstes Signal eines an einer ersten Messstelle an einem Zufluss zu der jeweiligen Messkammer angeordneten ersten Flüssigkeitssensors und ein zweites Signal eines an einer zweiten Messstelle an einem Abfluss derjeweiligen Messkammer angeordneten zweiten Flüssigkeitssensors, das die Präsenz von Flüssigkeit an der jeweiligen Messstelle indiziert, zu empfangen und beim Empfang des ersten und zweiten Signals jeweils einen Zeitstempel zu vergeben und aus dem Vergleich der beiden Zeitstempel und einem vorbekannten Volumen zwischen der ersten Messstelle und der zweiten Messstelle einen Volumenstromwert der Messkammer zu bestimmen, wobei die Steuerung ausgebildet ist, aus dem Volumenstromwert der ersten Messkammer und dem Volumenstromwert der zweiten Messkammer einen Mittelwert zu bilden und/oder wobei die Steuerung ausgebildet ist, für die Füllung der ersten Messkammer eine erste Pumprate einer an das Kalibrierelement angeschlossenen Pumpe zu initialisieren und einen ersten Volumenstromwert für die erste Pumprate zu bestimmen und für die Füllung der zweiten Messkammer eine zweite Pumprate der an das Kalibrierelement angeschlossenen Pumpe zu initialisieren und einen zweiten Volumenstromwert für die zweite Pumprate zu bestimmen.

In einer weiteren Ausführungsform ist die Steuerung bei einem Kalibrierelement mit Flusssensor ausgebildet, ein Flusssignal vom Flusssensor zu empfangen und den Flusssensor entsprechend mindestens einem zuvor bestimmten Volumenstrom zu kalibrieren. Dabei kann die Steuerung weiter ausgebildet sein, nach dem Kalibrieren des Flusssensors ein Pumpverhalten einer an das Kalibrierelement angeschlossenen Pumpe zu tracken.

Gemäß einem dritten Aspekt betrifft die Erfindung ein Kalibrationssystem umfassend ein Kalibrierelement gemäß dem ersten Aspekt der Erfindung und eine Steuerung gemäß einem zweiten Aspekt der Erfindung.

Gemäß einem vierten Aspekt betrifft die Erfindung ein Fördersystem umfassend ein Kalibrationssystem gemäß dem dritten Aspekt der Erfindung sowie eine mit dem Kalibrierelement über einen Zuflussschlauch fluidisch verbundene Pumpe, insbesondere eine Rollenpumpe oder peristaltische Pumpe.

Gemäß einem fünften Aspekt betrifft die Erfindung ein Verfahren zum Betrieb eines Kalibrierelements mit einer ersten und einer zweiten Messkammer sowie jeweils einem an einem Zufluss zur jeweiligen Messkammer angeordneten ersten Flüssigkeitssensor und einem an einem Abfluss der jeweiligen Messkammer angeordneten zweiten Flüssigkeitssensor umfassend die Schritte:
- Erfassen einer Präsenz von Flüssigkeit an einer ersten Messstelle am Zufluss zur jeweiligen Messkammer und Ausgeben eines ersten Signals
- Empfangen des ersten Signals und Vergeben eines ersten Zeitstempels
- Erfassen einer Präsenz von Flüssigkeit an einer zweiten Messstelle am Abfluss der jeweiligen Messkammer und Ausgeben eines zweiten Signals
- Empfangen des zweiten Signals und Vergeben eines zweiten Zeitstempels
- Vergleichen des ersten und zweiten Zeitstempels
- Bestimmen eines Volumenstromwertes aus dem Vergleich des ersten und zweiten Zeitstempels und einem vorbekannten Volumen zwischen der ersten und zweiten Messstelle der jeweiligen Messkammer

Erfindungsgemäß umfasst das Verfahren weiter den Schritt: Bilden eines Mittelwertes aus dem Volumenstromwert der ersten Messkammer und dem Volumenstromwert der zweiten Messkammer.

Erfindungsgemäß kann das Verfahren weiter umfassen die Schritte:
- vor dem Erfassen einer Präsenz von Flüssigkeit an der ersten Messstelle am Zufluss zu der ersten Messkammer Initialisieren einer ersten Pumprate einer an das Kalibrierelement angeschlossenen Pumpe für die Füllung der ersten Messkammer;
- Bestimmen eines ersten Volumenstromwerts für die erste Pumprate;
- vor dem Erfassen einer Präsenz von Flüssigkeit an der ersten Messstelle am Zufluss zu der zweiten Messkammer Initialisieren einer zweiten Pumprate einer an das Kalibrierelement angeschlossenen Pumpe für die Füllung der zweiten Messkammer;
- Bestimmen eines zweiten Volumenstromwerts für die zweite Pumprate.

Das Verfahren kann weiter die folgenden Schritte umfassen:
- Empfangen eines Flusssignals eines fluidisch mit mindestens einer der Messkammern verbundenen Flusssensors
- Kalibrieren des Flusssensors entsprechend mindestens einem zuvor bestimmten Volumenstrom.

Zusätzlich kann dieses Verfahren ein Tracken eines Pumpverhaltens einer an das Kalibrierelement angeschlossenen Pumpe umfassen.

Mögliche Ausführungen und Vorteile, welche mit Bezug auf das Kalibrierelement beschrieben sind, beziehen sich ebenso auf das Kalibrationssystem, die Steuerung, das Fördersystem sowie das Verfahren. So können auch für das Kalibrationssystem, die Steuerung, das Fördersystem sowie das Verfahren beliebige Ausführungsformen und Weiterbildungen des Kalibrierelementes, wie zuvor erläutert, verwendet werden. Für weitere Vorteile, Ausführungsvarianten und Ausführungsdetails dieser weiteren Aspekte und ihrer möglichen Fortbildungen wird daher auch auf die zuvor erfolgte Beschreibung zu den entsprechenden Merkmalen und Fortbildungen des Kalibrierelementes verwiesen.

Bevorzugte Ausführungsformen der Erfindung werden beispielhaft anhand der beiliegenden Figuren erläutert. Es zeigen:
Fig. 1 eine Ausführungsform eines Fördersystems gemäß dem dritten Aspekt der Erfindung;
Fig. 2 eine Ausführungsform eines Verfahrens zum Betrieb eines Kalibrierelements gemäß dem fünften Aspekt der Erfindung.

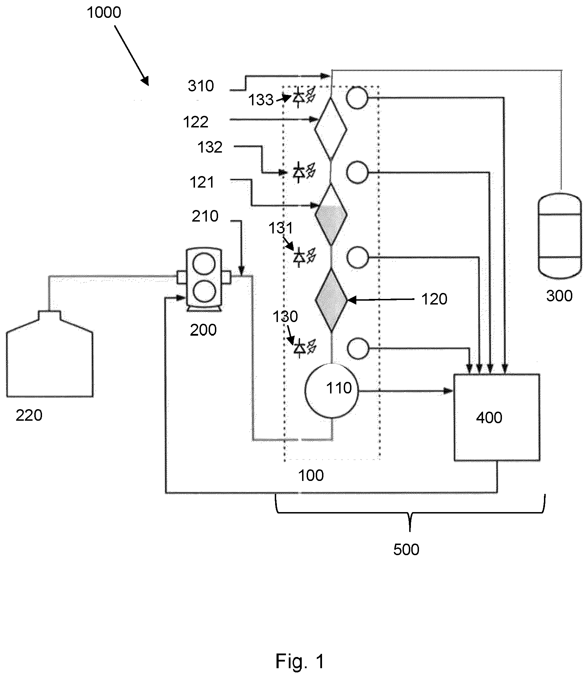

Fig. 1 zeigt eine Ausführungsform eines Fördersystems 1000 gemäß dem dritten Aspekt der Erfindung. Das Fördersystem 1000 umfasst neben einem Reservoir 220 und einem Bioreaktor 300 ein Kalibrationssystem 500 mit einem Kalibrierelement 100 und einer Steuerung 400. Das Kalibrierelement 100 ist über einen Zuflussschlauch 210 fluidisch mit einer Pumpe 200 verbunden. Ein weiterer Zuflussschlauch 310 verbindet das Kalibrierelement 100 mit dem Bioreaktor 300. Im Fördersystem 1000 werden Flüssigkeiten aus dem Reservoir 220 in den Bioreaktor 300 transportiert. Die Zugabe von Flüssigkeit erfolgt dank des Kalibrierelementes 100 kontrolliert.

Das Kalibrierelement 100 umfasst in der gezeigten Ausführungsform drei Messkammer 120, 121, 122 sowie einen an einer ersten Messstelle an einem Zufluss zur Messkammer 120 angeordneten ersten Flüssigkeitssensor 130 zur Detektion einer Präsenz einer Flüssigkeit und einen an einer zweiten Messstelle an einem Abfluss der Messkammer 120 angeordneten zweiten Flüssigkeitssensor 131. Der zweite Flüssigkeitssensor 131 der ersten Messkammer 120 ist dabei gleichzeitig der erste Flüssigkeitssensor der direkt nachfolgend zur ersten Messkammer angeordneten zweiten Messkammer 121. Der zweite Flüssigkeitssensor 132 der zweiten Messkammer 121 ist dabei gleichzeitig der erste Flüssigkeitssensor der direkt nachfolgend zur zweiten Messkammer 121 angeordneten dritten Messkammer 122. Des Weiteren verfügt auch die dritte Messkammer über einen zweiten Flüssigkeitssensor 133, der am Abfluss der dritten Messkammer angeordnet ist. Die Messkammern sind im gezeigten Ausführungsbeispiel, nicht gemäß der beanspruchten Erfindung, in Reihe geschaltet. Im gezeigten beispielhaften Zustand ist die erste Messkammer 120 bereits vollständig mit der Flüssigkeit aus dem Reservoir 220 gefüllt, die zweite Messkammer wird gerade gefüllt. Die Nutzung mehrerer Messkammer bietet den Vorteil, dass eine Mittelung der in den Messkammern jeweils ermittelten Volumenströme möglich ist, was eine größere Genauigkeit ermöglicht oder dass für die verschiedenen Messkammer unterschiedliche Pumpraten verwendet werden können und so Volumenströme für unterschiedliche Pumpraten bestimmt werden können.

Die Messkammern 120, 121 und 122 weisen hier jeweils einen rautenförmigen Querschnitt auf und werden von einer Spitze der Raute zur gegenüberliegenden Spitze durchflossen. Dieser Aufbau erlaubt es besonders gut, Schwankungen, zum Beispiel in der Oberflächenspannung, auszugleichen. Die Flüssigkeitssensoren 130, 131, 132, 133 sind im gezeigten Ausführungsbeispiel ausgebildet, eine Präsenz von Flüssigkeit optisch zu detektieren. Alternativ sind auch akustische Detektion oder Detektion über eine Widerstands- oder Impedanzmessung möglich.

Das gezeigte Kalibrierelement 100 weist weiter einen fluidisch mit den Messkammern verbundenen Flusssensor 110 auf, der hier ein Massenflusssensor ist.

Die Steuerung 400 für das Kalibrierelement 100 ist ausgebildet, ein erstes Signal des an der ersten Messstelle am Zufluss zu der ersten Messkammer 120 angeordneten ersten Flüssigkeitssensors 130 und ein zweites Signal des an der zweiten Messstelle am Abfluss der ersten Messkammer 120 angeordneten zweiten Flüssigkeitssensors 131, das die Präsenz von Flüssigkeit an der jeweiligen Messstelle indiziert, zu empfangen und beim Empfang des ersten und zweiten Signals jeweils einen Zeitstempel zu vergeben und aus dem Vergleich der beiden Zeitstempel und einem vorbekannten Volumen zwischen der ersten Messstelle und der zweiten Messstelle einen Volumenstromwert der ersten Messkammer 120 zu bestimmen. Die Steuerung 400 ist ebenso ausgebildet, ein erstes Signal des an der ersten Messstelle am Zufluss zu der zweiten Messkammer 121 angeordneten ersten Flüssigkeitssensors 131 und ein zweites Signal des an der zweiten Messstelle am Abfluss der zweiten Messkammer 121 angeordneten zweiten Flüssigkeitssensors 132, das die Präsenz von Flüssigkeit an der jeweiligen Messstelle indiziert, zu empfangen und beim Empfang des ersten und zweiten Signals jeweils einen Zeitstempel zu vergeben und aus dem Vergleich der beiden Zeitstempel und einem vorbekannten Volumen zwischen der ersten Messstelle und der zweiten Messstelle einen Volumenstromwert der zweiten Messkammer 121 zu bestimmen. Die Steuerung 400 ist ebenso ausgebildet, ein erstes Signal des an der ersten Messstelle am Zufluss zu der dritten Messkammer 122 angeordneten ersten Flüssigkeitssensors 132 und ein zweites Signal des an der zweiten Messstelle am Abfluss der dritten Messkammer 122 angeordneten zweiten Flüssigkeitssensors 133, das die Präsenz von Flüssigkeit an der jeweiligen Messstelle indiziert, zu empfangen und beim Empfang des ersten und zweiten Signals jeweils einen Zeitstempel zu vergeben und aus dem Vergleich der beiden Zeitstempel und einem vorbekannten Volumen zwischen der ersten Messstelle und der zweiten Messstelle einen Volumenstromwert der dritten Messkammer 122 zu bestimmen.

Weiterhin ist die Steuerung ausgebildet, aus dem Volumenstromwert der ersten Messkammer 120 und dem Volumenstromwert der zweiten Messkammer 121 und dem Volumenstromwert der dritten Messkammer 122 einen Mittelwert zu bilden. Für einen weiteren Anwendungsfall ist die Steuerung ebenfalls ausgebildet, für die Füllung der ersten Messkammer 120 eine erste Pumprate der an das Kalibrierelement angeschlossenen Pumpe 200 zu initialisieren und einen ersten Volumenstromwert für die erste Pumprate zu bestimmen und für die Füllung der zweiten Messkammer 121 eine zweite Pumprate der an das Kalibrierelement angeschlossenen Pumpe 200 zu initialisieren und einen zweiten Volumenstromwert für die zweite Pumprate zu bestimmen und für die Füllung der dritten Messkammer 122 eine zweite Pumprate der an das Kalibrierelement angeschlossenen Pumpe 200 zu initialisieren und einen dritten Volumenstromwert für die dritte Pumprate zu bestimmen.

Des Weiteren ist die gezeigte Steuerung 400 ausgebildet, ein Flusssignal vom Flusssensor 110 zu empfangen und den Flusssensor 110 entsprechend mindestens einem der zuvor bestimmten Volumenströme zu kalibrieren. Weiter ist die Steuerung ausgebildet, nach dem Kalibrieren des Flusssensors ein Pumpverhalten der an das Kalibrierelement angeschlossenen Pumpe 200 zu tracken.

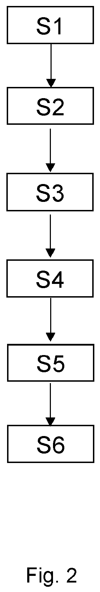

Fig. 2 zeigt eine Ausführungsform eines Verfahrens zum Betrieb eines Kalibrierelements gemäß dem fünften Aspekt der Erfindung. Das Kalibrierelement weist dabei mindestens eine Messkammer sowie einen an einem Zufluss zur Messkammer angeordneten ersten Flüssigkeitssensor und einen an einem Abfluss der Messkammer angeordneten zweiten Flüssigkeitssensor auf. In einem ersten Schritt S1 umfasst das Verfahren Erfassen einer Präsenz von Flüssigkeit an einer ersten Messstelle am Zufluss zur Messkammer und Ausgeben eines ersten Signals. Sodann wird in Schritt S2 das erste Signal Empfangen und ein erster Zeitstempel vergeben.

In Schritt S3 erfolgt ein Erfassen einer Präsenz von Flüssigkeit an einer zweiten Messstelle am Abfluss der Messkammer und Ausgeben eines zweiten Signals. Im anschließenden Schritt S4 wird das zweite Signal empfangen und ein zweiter Zeitstempel vergeben.

In Schritt S5 erfolgt ein Vergleichen des ersten und zweiten Zeitstempels.

Aus dem Vergleich des ersten und zweiten Zeitstempels und einem vorbekannten Volumen zwischen der ersten und zweiten Messstelle wird sodann in Schritt S6 ein Volumenstromwert bestimmt.

In einer hier nicht gezeigten Ausführungsform kann das Verfahren bei Vorhandensein zweier Messkammern im Kalibrierelement den Schritt Bilden eines Mittelwertes aus dem Volumenstromwert der ersten Messkammer und dem Volumenstromwert der zweiten Messkammer umfassen. In einer weiteren nicht dargestellten Ausführungsform umfasst das Verfahren weiter die Schritte:
- vor dem Erfassen einer Präsenz von Flüssigkeit an der ersten Messstelle am Zufluss zu einer ersten Messkammer Initialisieren einer ersten Pumprate einer an das Kalibrierelement angeschlossenen Pumpe für die Füllung der ersten Messkammer;
- Bestimmen eines ersten Volumenstromwerts für die erste Pumprate;
- vor dem Erfassen einer Präsenz von Flüssigkeit an der ersten Messstelle am Zufluss zu einer zweiten Messkammer Initialisieren einer zweiten Pumprate einer an das Kalibrierelement angeschlossenen Pumpe für die Füllung der zweiten Messkammer;
- Bestimmen eines zweiten Volumenstromwerts für die zweite Pumprate.

Ist im Kalibrierelement ein Flusssensor enthalten kann das Verfahren weiter die folgenden Schritte umfassen: Empfangen eines Flusssignals eines fluidisch mit der mindestens einen Messkammer verbundenen Flusssensors und Kalibrieren des Flusssensors entsprechend mindestens einem zuvor bestimmten Volumenstrom.

### Bezugszeichenliste

- 100: Kalibrierelement
- 110: Flusssensor
- 120: Messkammer
- 121: Messkammer
- 122: Messkammer
- 130: Flüssigkeitssensor
- 131: Flüssigkeitssensor
- 132: Flüssigkeitssensor
- 133: Flüssigkeitssensor
- 200: Pumpe
- 210: Zuflussschlauch
- 220: Reservoir
- 300: Bioreaktor
- 310: Zuflussschlauch
- 400: Steuerung
- 500: Kalibrationssystem
- 1000: Fördersystem

## Patentansprüche

1. Kalibrierelement (100) umfassend mindestens zwei Messkammern (120, 121, 122) mit jeweils einem an einer ersten Messstelle an einem Zufluss zur jeweiligen Messkammer (120, 121, 122) angeordneten ersten Flüssigkeitssensor (130) zur Detektion einer Präsenz einer Flüssigkeit und einem an einer zweiten Messstelle an einem Abfluss der jeweiligen Messkammer angeordneten zweiten Flüssigkeitssensor (131, 132), wobei die mindestens zwei Messkammern fluidisch parallel geschaltet sind.

2. Kalibrierelement (100) nach Anspruch 1, bei dem mindestens eine der Messkammern einen rautenförmigen Querschnitt aufweist und von einer Spitze der Raute zur gegenüberliegenden Spitze durchflossen wird, wobei insbesondere die mindestens eine Messkammer die Form eines Rhomboeders oder einer Doppelpyramide aufweist.

3. Kalibrierelement (100) nach einem der vorstehenden Ansprüche, bei dem der erste und/oder der zweite Flüssigkeitssensor ausgebildet ist, eine Präsenz von Flüssigkeit optisch, akustisch oder über eine Widerstands- oder Impedanzmessung zu detektieren.

4. Kalibrierelement (100) nach einem der vorstehenden Ansprüche weiter umfassend einen fluidisch mit mindestens einer der Messkammern verbundenen Flusssensor (110), insbesondere einen Massenflusssensor.

5. Steuerung (400) für ein Kalibrierelement (100) mit einer ersten und einer zweiten Messkammer, wobei die Steuerung ausgebildet ist, ein erstes Signal eines an einer ersten Messstelle an einem Zufluss zu der jeweiligen Messkammer (120) angeordneten ersten Flüssigkeitssensors (130) und ein zweites Signal eines an einer zweiten Messstelle an einem Abfluss derjeweiligen Messkammer angeordneten zweiten Flüssigkeitssensors (131), das die Präsenz von Flüssigkeit an der jeweiligen Messstelle indiziert, zu empfangen und beim Empfang des ersten und zweiten Signals jeweils einen Zeitstempel zu vergeben und aus dem Vergleich der beiden Zeitstempel und einem vorbekannten Volumen zwischen der ersten Messstelle und der zweiten Messstelle einen Volumenstromwert der Messkammer zu bestimmen, wobei die Steuerung ausgebildet ist, aus dem Volumenstromwert der ersten Messkammer (120) und dem Volumenstromwert der zweiten Messkammer (121) einen Mittelwert zu bilden und/oder wobei die Steuerung ausgebildet ist, für die Füllung der ersten Messkammer eine erste Pumprate einer an das Kalibrierelement angeschlossenen Pumpe (200) zu initialisieren und einen ersten Volumenstromwert für die erste Pumprate zu bestimmen und für die Füllung der zweiten Messkammer eine zweite Pumprate der an das Kalibrierelement angeschlossenen Pumpe zu initialisieren und einen zweiten Volumenstromwert für die zweite Pumprate zu bestimmen.

6. Steuerung (400) nach Anspruch 5, die bei einem Kalibrierelement mit Flusssensor ausgebildet ist, ein Flusssignal vom Flusssensor zu empfangen und den Flusssensor entsprechend mindestens einem zuvor bestimmten Volumenstrom zu kalibrieren, wobei die Steuerung insbesondere weiter ausgebildet ist, nach dem Kalibrieren des Flusssensors ein Pumpverhalten einer an das Kalibrierelement angeschlossenen Pumpe zu tracken.

7. Kalibrationssystem (500) umfassend ein Kalibrierelement (100) nach einem der Ansprüche 1 bis 4 und eine Steuerung (400) nach einem der Ansprüche 5 oder 6.

8. Fördersystem (1000) umfassend ein Kalibrationssystem nach Anspruch 7 sowie eine mit dem Kalibrierelement über einen Zuflussschlauch (210) fluidisch verbundene Pumpe (200), insbesondere eine Rollenpumpe oder eine peristaltische Pumpe.

9. Verfahren zum Betrieb eines Kalibrierelements (100) mit einer ersten und einer zweiten Messkammer (120) sowie jeweils einem an einem Zufluss zur jeweiligen Messkammer (120) angeordneten ersten Flüssigkeitssensor (130) und einem an einem Abfluss der jeweiligen Messkammer angeordneten zweiten Flüssigkeitssensor (131) umfassend die Schritte:
- Erfassen einer Präsenz von Flüssigkeit an einer ersten Messstelle am Zufluss zur jeweiligen Messkammer (120) und Ausgeben eines ersten Signals
- Empfangen des ersten Signals und Vergeben eines ersten Zeitstempels
- Erfassen einer Präsenz von Flüssigkeit an einer zweiten Messstelle am Abfluss der jeweiligen Messkammer (120) und Ausgeben eines zweiten Signals
- Empfangen des zweiten Signals und Vergeben eines zweiten Zeitstempels
- Vergleichen des ersten und zweiten Zeitstempels
- Bestimmen eines Volumenstromwertes aus dem Vergleich des ersten und zweiten Zeitstempels und einem vorbekannten Volumen zwischen der ersten und zweiten Messstelle der jeweiligen Messkammer (120), weiter umfassend den Schritt Bilden eines Mittelwertes aus dem Volumenstromwert der ersten Messkammer und dem Volumenstromwert der zweiten Messkammer und/oderweiter umfassend die Schritte:
- vor dem Erfassen einer Präsenz von Flüssigkeit an der ersten Messstelle am Zufluss zu der ersten Messkammer Initialisieren einer ersten Pumprate einer an das Kalibrierelement angeschlossenen Pumpe für die Füllung der ersten Messkammer;
- Bestimmen eines ersten Volumenstromwerts für die erste Pumprate;
- vor dem Erfassen einer Präsenz von Flüssigkeit an der ersten Messstelle am Zufluss zu der zweiten Messkammer Initialisieren einer zweiten Pumprate einer an das Kalibrierelement angeschlossenen Pumpe für die Füllung der zweiten Messkammer;
- Bestimmen eines zweiten Volumenstromwerts für die zweite Pumprate.

10. Verfahren nach Anspruch 9 umfassend die Schritte
- Empfangen eines Flusssignals eines fluidisch mit mindestens einer der Messkammern verbundenen Flusssensors
- Kalibrieren des Flusssensors entsprechend mindestens einem zuvor bestimmten Volumenstrom sowie
- optional Tracken eines Pumpverhaltens einer an das Kalibrierelement angeschlossenen Pumpe.

## Claims

1. Calibration element (100) comprising at least two measuring chambers (120, 121, 122), each having a first liquid sensor (130) arranged at a first measuring point on an inlet to the respective measuring chamber (120, 121, 122) for detecting the presence of a liquid, and a second liquid sensor (131, 132) arranged at a second measuring point on an outlet of the respective measuring chamber, wherein the at least two measuring chambers are connected in parallel in terms of fluid flow.

2. Calibration element (100) according to claim 1, wherein at least one of the measuring chambers has a diamond-shaped cross-section and is traversed by a flow from one apex of the diamond to the opposite apex, wherein, in particular, the at least one measuring chamber has the shape of a rhombohedron or a double pyramid.

3. Calibration element (100) according to one of the preceding claims, wherein the first and/or the second fluid sensor is designed to detect the presence of fluid optically, acoustically or via a resistance or impedance measurement.

4. Calibration element (100) according to one of the preceding claims, further comprising a flow sensor (110) fluidically connected to at least one of the measuring chambers, in particular a mass flow sensor.

5. A controller (400) for a calibration element (100) having a first and a second measuring chamber, wherein the controller is configured to receive a first signal from a first liquid sensor (130) arranged at a first measuring point on an inflow to the respective measuring chamber (120) (130) and a second signal from a second fluid sensor (131) arranged at a second measuring point on an outlet of the respective measuring chamber, which indicates the presence of liquid at the respective measuring point, and upon receipt of the first and second signals to assign a timestamp to each, and to determine a flow rate value of the measuring chamber from the comparison of the two timestamps and a pre-known volume between the first measuring point and the second measuring point, wherein the controller is configured to form an average value from the flow rate value of the first measuring chamber (120) and the flow rate value of the second measuring chamber (121), and/or wherein the controller is configured to set a first pump rate for a pump (200) and determining a first flow rate value for the first pumping rate, and for filling the second measuring chamber, initialising a second pumping rate of the pump connected to the calibration element and determining a second flow rate value for the second pumping rate.

6. A controller (400) according to claim 5, which, in the case of a calibration element with a flow sensor, is configured to receive a flow signal from the flow sensor and to calibrate the flow sensor in accordance with at least one previously determined flow rate, wherein the controller is further configured, in particular, to track the pumping behaviour of a pump connected to the calibration element after the flow sensor has been calibrated.

7. A calibration system (500) comprising a calibration element (100) according to any one of claims 1 to 4 and a controller (400) according to any one of claims 5 or 6.

8. Conveying system (1000) comprising a calibration system according to claim 7 and a pump (200) fluidically connected to the calibration element via an inlet hose (210), in particular a roller pump or a peristaltic pump.

9. Method for operating a calibration element (100) having a first and a second measuring chamber (120) and, in each case, a first liquid sensor (130) arranged at an inlet to the respective measuring chamber (120) and a second liquid sensor (131) arranged at an outlet of the respective measuring chamber, comprising the steps:
- Detecting the presence of liquid at a first measuring point at the inlet to the respective measuring chamber (120) and outputting a first signal
- receiving the first signal and assigning a first timestamp
- Detecting the presence of liquid at a second measuring point at the outlet of the respective measuring chamber (120) and outputting a second signal
- Receiving the second signal and assigning a second timestamp
- Comparing the first and second timestamps
- Determining a flow rate value from the comparison of the first and second timestamps and a known volume between the first and second measuring points of the respective measuring chamber (120), further comprising the step of forming an average value from the flow rate value of the first measuring chamber and the flow rate value of the second measuring chamber and/or further comprising the steps:
- prior to detecting the presence of liquid at the first measuring point at the inlet to the first measuring chamber, initialising a first pump rate of a pump connected to the calibration element for filling the first measuring chamber;
- determining a first flow rate value for the first pumping rate;
- prior to detecting the presence of liquid at the first measuring point at the inlet to the second measuring chamber, initialising a second pump rate of a pump connected to the calibration element for filling the second measuring chamber;
- determining a second flow rate value for the second pumping rate.

10. The method according to claim 9, comprising the steps
- receiving a flow signal from a flow sensor fluidically connected to at least one of the measuring chambers
- calibrating the flow sensor in accordance with at least one previously determined flow rate, and
- optionally tracking the pumping behaviour of a pump connected to the calibration element

## Revendications

1. Élément d'étalonnage (100) comprenant au moins deux chambres de mesure (120, 121, 122) comportant chacune un premier capteur de liquide (130) disposé en un premier point de mesure au niveau d'une arrivée vers la chambre de mesure respective (120, 121, 122) pour détecter la présence d'un liquide et un deuxième capteur de liquide (131, 132) disposé à un deuxième point de mesure au niveau d'une sortie de la chambre de mesure respective, les au moins deux chambres de mesure étant montées en parallèle sur le plan fluidique.

2. Élément d'étalonnage (100) selon la revendication 1, dans lequel au moins l'une des chambres de mesure présente une section transversale en forme de losange et est traversée par un écoulement allant d'une pointe du losange à la pointe opposée, ladite au moins une chambre de mesure présentant notamment la forme d'un rhomboèdre ou d'une double pyramide.

3. Élément d'étalonnage (100) selon l'une des revendications précédentes, dans lequel le premier et/ou le deuxième capteur de liquide est conçu pour détecter la présence de liquide de manière optique, acoustique ou par une mesure de résistance ou d'impédance.

4. Élément d'étalonnage (100) selon l'une des revendications précédentes, comprenant en outre un capteur de débit (110) relié de manière fluidique à au moins l'une des chambres de mesure, en particulier un capteur de débit massique.

5. Commande (400) pour un élément d'étalonnage (100) comportant une première et une deuxième chambres de mesure, la commande étant conçue pour générer un premier signal provenant d'un premier capteur de liquide (130) disposé en un premier point de mesure sur un afflux vers la chambre de mesure respective (120) (130) et un deuxième signal provenant d'un deuxième capteur de liquide (131) disposé en un deuxième point de mesure au niveau d'une sortie de la chambre de mesure respective, qui indique la présence de liquide au point de mesure correspondant, et à attribuer un horodatage à la réception des premier et deuxième signaux, et à déterminer, à partir de la comparaison des deux horodatages et d'un volume connu entre le premier point de mesure et le deuxième point de mesure, une valeur de débit volumique de la chambre de mesure, la commande étant conçue pour calculer une valeur moyenne à partir de la valeur de débit volumique de la première chambre de mesure (120) et de la valeur de débit volumique de la deuxième chambre de mesure (121) et/ou dans lequel la commande est conçue pour déterminer, pour le remplissage de la première chambre de mesure, un premier débit de pompage d'une pompe raccordée à l'élément d'étalonnage (200) et de déterminer une première valeur de débit volumique pour le premier débit de pompage, et d'initialiser un deuxième débit de pompage de la pompe raccordée à l'élément d'étalonnage pour le remplissage de la deuxième chambre de mesure et de déterminer une deuxième valeur de débit volumique pour le deuxième débit de pompage.

6. Commande (400) selon la revendication 5, qui est conçue, dans le cas d'un élément d'étalonnage avec capteur de débit, pour recevoir un signal de débit provenant du capteur de débit et pour étalonner le capteur de débit en fonction d'au moins un débit volumique prédéterminé, la commande étant en outre conçue, en particulier, pour suivre le comportement de pompage d'une pompe raccordée à l'élément d'étalonnage après l'étalonnage du capteur de débit.

7. Système d'étalonnage (500) comprenant un élément d'étalonnage (100) selon l'une des revendications 1 à 4 et une commande (400) selon l'une des revendications 5 ou 6.

8. Système de refoulement (1000) comprenant un système d'étalonnage selon la revendication 7 ainsi qu'une pompe (200), en particulier une pompe à rouleaux ou une pompe péristaltique, reliée de manière fluidique à l'élément d'étalonnage par l'intermédiaire d'un tuyau d'alimentation (210).

9. Procédé de fonctionnement d'un élément de calibrage (100) comportant une première et une deuxième chambres de mesure (120) ainsi qu'un premier capteur de liquide (130) disposé au niveau d'une entrée de la chambre de mesure respective (120) et un deuxième capteur de liquide (131) disposé au niveau d'une sortie de la chambre de mesure respective, comprenant les étapes suivantes :
- détecter la présence de liquide en un premier point de mesure situé à l'entrée de la chambre de mesure respective (120) et émettre un premier signal
- réception du premier signal et attribution d'un premier horodatage
- détecter la présence de liquide en un deuxième point de mesure au niveau de la sortie de la chambre de mesure respective (120) et émettre un deuxième signal
- Réception du deuxième signal et attribution d'un deuxième horodatage
- Comparaison des premier et deuxième horodatages
- Détermination d'une valeur de débit volumique à partir de la comparaison entre le premier et le deuxième horodatage et d'un volume connu entre le premier et le deuxième point de mesure de la chambre de mesure respective (120), comprenant en outre l'étape consistant à calculer une valeur moyenne à partir de la valeur de débit volumique de la première chambre de mesure et de la valeur de débit volumique de la deuxième chambre de mesure et/ou comprenant en outre les étapes suivantes :
- avant la détection d'une présence de liquide au premier point de mesure à l'entrée de la première chambre de mesure, initialisation d'un premier débit de pompage d'une pompe raccordée à l'élément d'étalonnage pour le remplissage de la première chambre de mesure ;
- déterminer une première valeur de débit volumique pour le premier débit de pompage ;
- avant la détection d'une présence de liquide au premier point de mesure situé à l'entrée de la deuxième chambre de mesure, initialisation d'un deuxième débit de pompage d'une pompe raccordée à l'élément d'étalonnage pour le remplissage de la deuxième chambre de mesure ;
- Détermination d'une deuxième valeur de débit volumique pour le deuxième débit de pompage.

10. Procédé selon la revendication 9, comprenant les étapes suivantes
- de réception d'un signal de débit provenant d'un capteur de débit relié de manière fluidique à au moins l'une des chambres de mesure
- étalonnage du capteur de débit en fonction d'au moins un débit volumique préalablement déterminé, ainsi que
- en option, le suivi du comportement d'une pompe raccordée à l'élément d'étalonnage
